# EUROPÄISCHE PATENTSCHRIFT

(11) **EP 1 193 806 B1**
(45) Veröffentlichungstag und Bekanntmachung des Hinweises auf die Patenterteilung: **04.11.2009**
(21) Anmeldenummer: 01121327.9
(22) Anmeldetag: 06.09.2001
(51) Int. Cl.: H01R 13/631

(54) **Steckverbindungseinrichtung, vorzugsweise für Aussenrückblickspiegel von Kraftfahrzeugen**
Plug-type connection device, preferably for an exterior rearview mirror of a vehicle
Dispositif de connexion, notamment pour rétroviseur extérieur de véhicule

(30) Priorität: 29.09.2000 DE 10048505
(43) Veröffentlichungstag der Anmeldung: 03.04.2002
(73) Patentinhaber: odelo GmbH, 71409 Schwaikheim (DE); SMR PATENTS S.à.r.l., 1653 Luxembourg (LU)
(72) Erfinder: Scheunpflug, Thomas, 71642 Ludwigsburg (DE); Secanu, Florin, 72622 Nürtingen (DE)
(74) Vertreter: Rausch, Gabriele

(56) Entgegenhaltungen:
- EP-A1- 0 371 835
- EP-A2- 0 797 273
- WO-A-98/57827
- DE-A1- 3 624 834
- DE-A1- 19 639 665
- FR-A- 609 223
- JP-A- 59 151 362
- US-A- 4 954 094
- US-A- 5 813 880
- US-A- 6 095 840

## Beschreibung

Die Erfindung betrifft eine Steckverbindungseinrichtung, vorzugsweise für Außenrückblickspiegel von Kraftfahrzeugen, nach dem Oberbegriff des Anspruches 1.

In Außenrückblickspiegel von Kraftfahrzeugen werden in letzter Zeit Blinkerleuchten eingebaut, die mit dem notwendigen Strom versorgt werden müssen. Im Außenrückblickspiegel ist hierfür die Steckverbindungseinrichtung untergebracht, die aus dem Steckergehäuse und dem Gegenstecker besteht. Beide Bauteile müssen bei der Montage des Außenrückblickspiegels zusammengesteckt werden, um das Leuchtmittel der Blinkerleuchte mit dem notwendigen Strom versorgen zu können. Häufig müssen diese Bauteile blind bei der Montage zusammengesteckt werden, d.h. die einwandfreie Kontaktierung kann nach dem Steckvorgang von außen nicht mehr vom Monteur Oberprüft werden. Darum kommt es immer wieder vor, daß der Gegenstecker und das Steckergehäuse nicht einwandfrei zusammengesteckt sind, insbesondere wenn diese beiden Teile nicht genau zueinander ausgerichtet sind.

Aus der EP 0 797 273 A2 ist eine Steckverbindungseinrichtung bekannt, bei der ein Steckergehäuse und ein Gegenstecker miteinander verbunden werden. Um bei einem Versatz der beiden Teile Ausgleichsbewegungen zu ermöglichen, ist das Steckergehäuse mit einer Art Kreuzschlitten versehen, der eine Bewegung in X- und in Y-Richtung des Steckerteiles des Steckergehäuses ermöglicht. Außerdem sind die Steckerkontakte mit einem federnden Abschnitt versehen, damit sich auch die Steckerkontakte beim Steckvorgang genau gegenüber den Gegenkontakten des Gegensteckers 6 ausrichten können. Diese Ausbildung einer Steckverbindungseinrichtung ist sehr aufwändig.

Bei einer anderen Ausbildung ist der Träger über vier elastische Säulen beweglich mit einer Trägerplatte verbunden. Die Säulen sind so ausgebildet, dass sie in X-, Y- und Z-Richtung elastisch biegbar sind. Diese Biegbarkeit der Säulen soll Ausgleichsbewegungen ermöglichen, die aufgrund des flexiblen Kabels bei der Montage der Einrichtung erforderlich sind.

Die US 4 954 094 zeigt eine Steckverbindungseinrichtung, bei der der Stecker und der Gegenstecker in zwei Rahmen aufgenommen sind. Der Rahmen hat zwei einander gegenüberliegende Zapfen sowie zwei einander gegenüberliegende Längsöffnungen. Mit den Zapfen greift der Rahmen in Längsöffnungen des Rahmens ein. In die Längsöffnungen des Rahmens greift der Gegenstecker mit den Zapfen ein. Der Gegenstecker hat eine zentrale Öffnung, in die ein Zapfen des Steckers eingesetzt wird. Der Stecker und der Gegenstecker werden hierbei durch entsprechende Formschlussteile beweglich in den Rahmen gehalten.

Der Erfindung liegt die Aufgabe zugrunde, die gattungsgemäße Steckverbindungseinrichtung so auszubilden, daß beim Steckvorgang eine einwandfreie Kontaktierung erfolgt, auch dann, wenn die entsprechenden Bauteile nicht genau zueinander ausgerichtet sind.

Diese Aufgabe wird bei der gattungsgemäßen Steckverbindungseinrichtung erfindungsgemäß mit den kennzeichnenden Merkmalen des Anspruches 1 gelöst.

Da das Steckergehäuse und/oder der Gegenstecker der erfindungsgemäßen Steckverbindungseinrichtung beim Steckvorgang relativ zueinander beweglich sind, können diese Teile einwandfrei auch dann zusammengesteckt werden, wenn sie nicht genau zueinander ausgerichtet sind. Infolge der Beweglichkeit des Steckergehäuses und/oder des Gegensteckers ist somit gewährleistet, daß auch bei blinder Montage die beiden Bauteile zuverlässig zusammengesteckt werden können. Die erfindungsgemäße Steckverbindungseinrichtung wird vorteilhaft bei Außenrückblickspiegeln von Kraftfahrzeugen eingesetzt, kann aber selbstverständlich auch überall dort eingesetzt werden, wo eine Kontaktierung durch Zusammenstecken zweier Bauteile einer Steckverbindungseinrichtung erforderlich ist. Der Steckerhalter weist den Trägerteil für das Steckergehäuse auf. Der Trägerteil ist über den wenigstens einen elastisch biegbaren Biegeabschnitt an den Quersteg angeschlossen. Er ist quer an dem elastisch biegbaren Abschnitt der Stütze vorgesehen. Der Biegeabschnitt und der Abschnitt der Stütze sind um winklig zueinander liegende Achsen elastisch biegbar. Die Stütze steht vom Grundkörper des Steckerhalters ab.

Eine besonders vorteilhafte Lösung ergibt sich, wenn ein Steckerhalter, der das Steckergehäuse aufnimmt, den Kontakt im Steckergehäuse gegen Verschieben beim Zusammenstecken mit dem Gegenstecker sichert. Dadurch ist gewährleistet, daß beim Zusammenstecken der Kontakt nicht durch den Gegenkontakt des Gegensteckers aus dem Steckergehäuse geschoben wird und damit gar keine Kontaktierung erfolgt. Die Verschiebesicherung stellt sicher, daß der Kontakt im Steckergehäuse beim Zusammensteckvorgang nicht herausgeschoben werden kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine in einem Spiegelgehäuse angeordnete Steckverbindungseinrichtung,
- Fig. 2: in perspektivischer Darstellung einen Steckerhalter und ein Steckergehäuse der erfindungsgemäßen Steckverbindungseinrichtung,
- Fig. 3: in perspektivischer Darstellung einen Gegenstecker der erfindungsgemäßen Steckverbindungseinrichtung,
- Fig. 4: in Seitenansicht den Steckerhalter der erfindungsgemäßen Steckverbindungseinrichtung,
- Fig. 5: eine Draufsicht auf den Steckerhalter gemäß Fig. 4,
- Fig. 6: in perspektivischer Darstellung das in den Steckerhalter eingesetzte Steckergehäuse der erfindungsgemäßen Steckverbindungseinrichtung,
- Fig. 7: in vergrößerter Darstellung einen Schnitt durch den Steckerhalter mit eingesetztem Steckergehäuse gemäß Fig. 6.

Mit der Steckverbindungseinrichtung ist es möglich, einen Gegenstecker und einen Steckerhalter mit darin befestigtem Steckergehäuse einwandfrei miteinander zu kontaktieren, auch wenn diese Teile nicht genau zueinander ausgerichtet sind. Dadurch können der Steckerhalter und der Gegenstecker blind, d.h. ohne daß diese Bauteile sichtbar sind, zuverlässig zusammengesteckt werden.

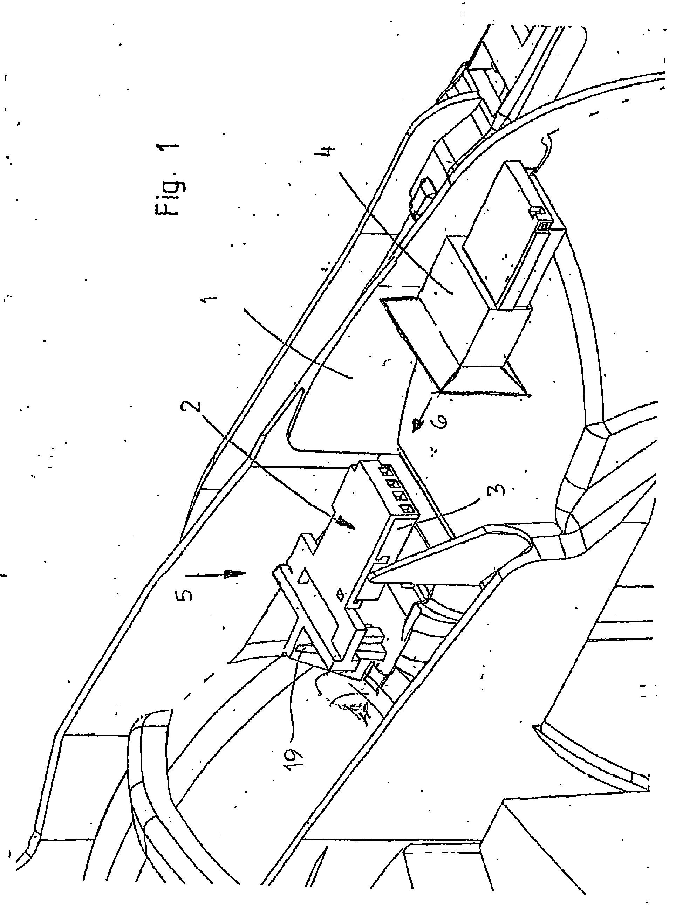

Die Steckverbindungseinrichtung ist im Ausführungsbeispiel in ein Spiegelgehäuse 1 eines Außenrückblickspiegels eines Kraftfahrzeuges eingesetzt und hat einen Steckerhalter 2, der ein Steckergehäuse 3 aufnimmt und mit einem Gegenstecker 4 verbunden wird. In Fig. 1 ist vom Spiegelgehäuse 1 nur der Träger dargestellt. Der Steckerhalter 2 wird in Steckrichtung 5 in seine Einbaulage im Spiegelgehäuse 1 eingesetzt, während der Gegenstecker 4 in Steckrichtung 6 auf den Steckerhalter 2 gesteckt wird. Damit der Steckerhalter 2 und der Gegenstecker 4 auch dann zuverlässig zusammengesteckt werden können, wenn diese beiden Teile nicht genau zueinander ausgerichtet sind, ist der Steckerhalter 2 in der Einbaulage begrenzt beweglich.

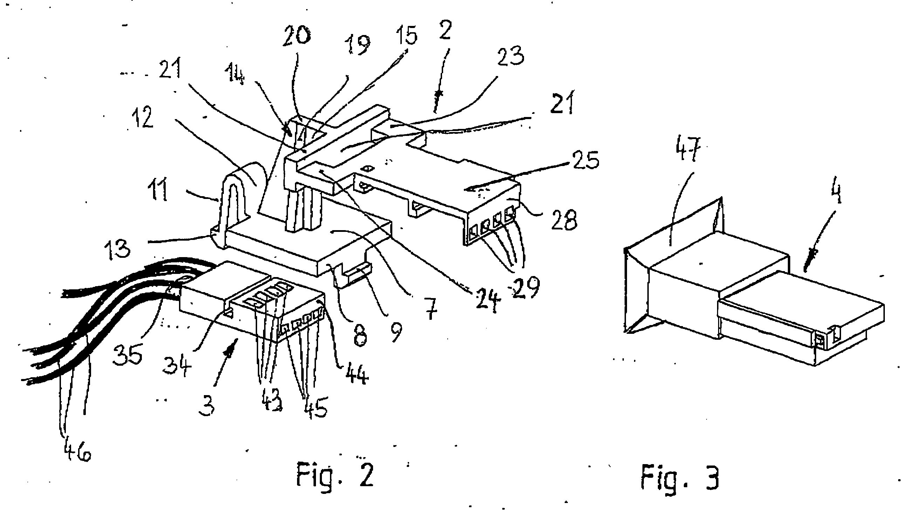

Der Steckerhalter 2 hat einen plattenförmigen Grundkörper 7 (Fig. 2), der rechteckigen Querschnitt hat. Von der einen Schmalseite 8 des Grundkörpers 7 steht ein Rasthaken 9 ab, der vorteilhaft einstückig mit dem Grundkörper 7 ausgebildet ist. Der Rasthaken 9 liegt in halber Länge der Schmalseite 8 und rastet in eine entsprechende Einbauöffnung des Spiegelgehäuses 1 ein.

An der gegenüberliegenden Schmalseite 10 des Grundkörpers 7 ist ein weiteres Rastelement 11 vorgesehen, das ebenfalls in halber Länge der Schmalseite 10 angeordnet und vorteilhaft einstückig mit dem Grundkörper 7 ausgebildet ist. Das Rastelement 11 hat einen etwa haarnadelförmig gekrümmten Biegeteil 12, das von der Schmalseite 10 aus sich über den Grundkörper 7 erstreckt und dann bogenförmig gekrümmt bis über die gegenüberliegende Seite des Grundkörpers 7 verläuft. Am freien Ende ist der Biegeteil 12 mit einer Rastnase 13 versehen, die im Ausführungsbeispiel auf gleicher Höhe mit der Rastnase des Rasthakens 9 liegt. Je nach Ausbildung des Einbauortes können die beiden Rastnasen der Rastelemente 9, 11 auch auf unterschiedlicher Höhe liegen. Beim Einbau des Steckerhalters 2 wird der Biegeteil 12 zunächst elastisch zusammengedrückt, bis die Rastnase 13 in eine entsprechende Rastöffnung des Spiegelgehäuses 1 gelangt. Dann federt der Biegeteil 12 zurück, so daß die Rastnase 13 den Rand der Rastöffnung untergreift. Auf diese Weise läßt sich der Steckerhalter 2 einfach im Spiegelgehäuse 1 montieren. Zur Demontage des Steckerhalters 2 muß lediglich der Biegeteil 12 des Rastelementes 11 zusammengedrückt werden, so daß die Rastnase 13 vom Rand der Rastöffnung freikommt. Dann läßt sich der Steckerhalter 2 einfach vom Spiegelgehäuse 1 abnehmen.

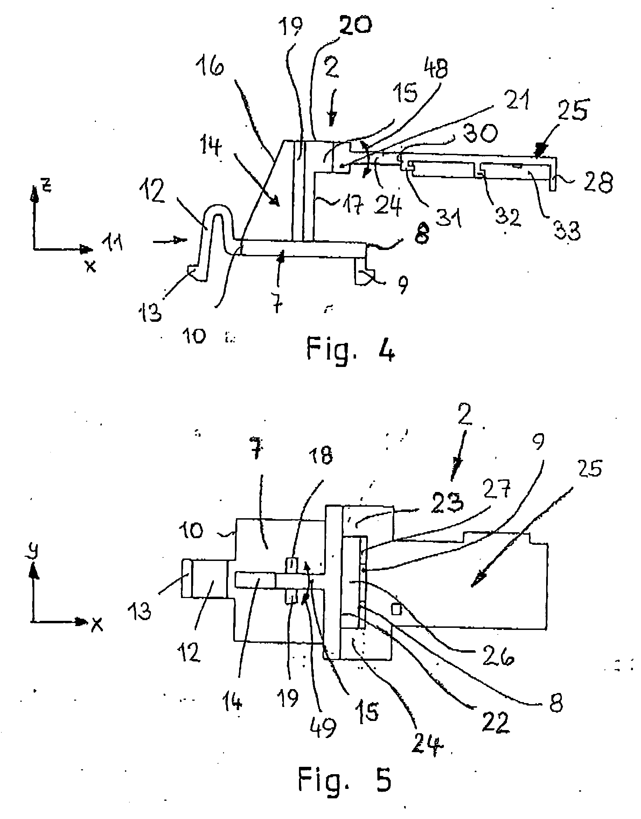

Auf der von der Rastnase 13 abgewandten Seite steht vom Grundkörper 7 senkrecht eine in Seitenansicht trapezförmige Stütze 14 ab, die in halber Breite des Grundkörpers 7 vorgesehen ist und sich parallel zu den Längsseiten des Grundkörpers erstreckt. Im oberen Endbereich ist die Stütze 14 durch einen in Seitenansicht (Fig. 4) rechteckförmigen Abschnitt 15 verlängert, der in der Ebene der Stütze 14 liegt. Der Abschnitt 15 und die Stütze 14 sind vorteilhaft einstückig miteinander und mit dem Grundkörper 7 ausgebildet. Wie Fig. 4 zeigt, liegt der Abschnitt 15 mit Abstand vom Grundkörper 7.

Die Stütze 14 verjüngt sich vom Grundkörper 7 aus in Richtung auf ihr freies Ende. Der dem Rastelement 11 zugewandte Rand 16 endet in Höhe der Schmalseite 10 des Grundkörpers 7. Der gegenüberliegende Rand 17 der Stütze 14 liegt mit Abstand von der Schmalseite 8 des Grundkörpers 7 und erstreckt sich senkrecht zu dessen Oberseite. Im Bereich zwischen den beiden Rändern 16 und 17 der Stütze 14 schließen an beide Seiten der Stütze Querstützen 18 und 19 an, die sich vom Grundkörper 7 aus bis zum oberen, ebenen Rand 20 der Stütze 14 erstrecken. Die beiden Querstützen 18, 19 sind in Ansicht (Fig. 1 und 2) jeweils dreieckförmig ausgebildet und verjüngen sich vom Grundkörper 7 aus in Richtung auf den Rand 20 der Stütze 14. Die Querstützen 18, 19 sind so ausgebildet, daß ihre Breite am Rand 20 der Stütze 14 Null beträgt.

An die Stirnseite des Verlängerungsabschnittes 15 schließt senkrecht ein Quersteg 21 an, der gleiche Höhe wie der Abschnitt 15 hat und, in Draufsicht gemäß Fig. 5 gesehen, den Grundkörper 7 an beiden Längsseiten überragt. Der Quersteg 21 hat über seine Länge konstante Breite und Höhe.

An die von der Stütze 14 abgewandte Stirnseite 22 des Quersteges 21 ist mit zwei zueinander parallelen Schenkeln 23, 24 ein Trägerteil 25 angeschlossen. Er ist vorteilhaft einstückig mit den Schenkeln 23, 24 ausgebildet, die ihrerseits vorteilhaft einstückig mit dem Quersteg 21 ausgebildet sind. Die Schenkel 23, 24 schließen in halber Höhe an den Quersteg 21 an. Die Schenkel 23, 24 begrenzen eine rechteckförmige Öffnung 26, die außerdem von der Stirnseite 22 des Quersteges 21 und vom gegenüberliegenden, parallel zum Quersteg verlaufenden Rand 27 des Trägerteiles 25 begrenzt wird. Der Trägerteil 25 ist im wesentlichen plattenförmig ausgebildet und ist am freien Ende mit einem senkrecht an ihn anschließenden Quersteg 28 versehen, der in Richtung auf den Grundkörper 7 vorsteht und in dem Öffnungen 29 (Fig. 2) vorgesehen sind, durch die (nicht dargestellte) Kontakte des Gegensteckers 4 ragen.

Am gegenüberliegenden Rand 30 und etwa in halber Länge des Trägerteiles 25 sind zwei L-förmige Führungen 31 und 32 vorgesehen, die sich über die Breite des Trägerteiles parallel zueinander und zum Quersteg 28 erstrecken. Die Führungen 31, 32 ragen über die gleiche Seite des Trägerteiles 25 wie der Quersteg 28. Wie Fig. 4 zeigt, steht die Führung 32 weiter über den Trägerteil 25 vor als die Führung 31. Der Quersteg 28 seinerseits überragt die Führung 32.

Die Schenkel 23, 24 ragen, in Draufsicht gesehen, über die Schmalseite 8 des Grundkörpers 7, so daß der Trägerteil 25, in Draufsicht gesehen, neben dem Grundkörper 7 liegt. Die Führungen 31, 32 und der Quersteg 28 sind an einem Ende durch eine Längswand 33 miteinander verbunden, die einen Anschlag beim Einschieben des Steckergehäuses 3 in den Steckerhalter 2 bildet.

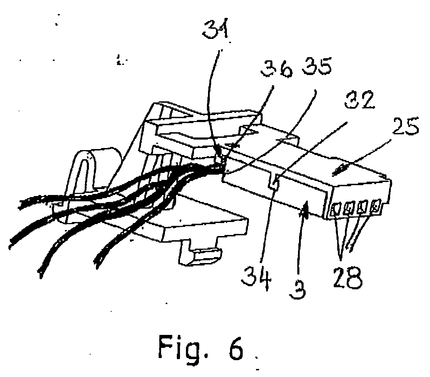

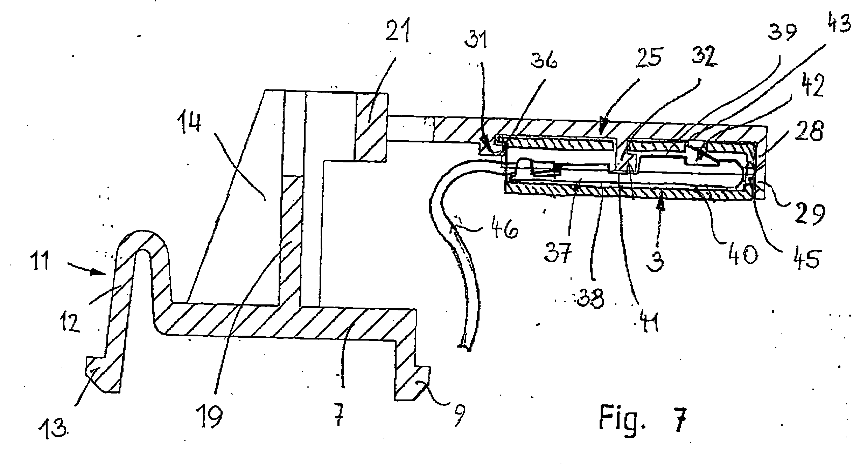

Das Steckergehäuse 3 ist quaderförmig ausgebildet und weist an einer Seite eine L-förmige Vertiefung 34 auf (Fig. 2), in die die Führung 32 des Trägerteils 25 formschlüssig eingreift. Außerdem liegt das Steckergehäuse 3 in der Einbaulage mit seiner einen Schmalseite 35 am freien Ende des kurzen Schenkels 36 der Führung 31 an (Fig. 6 und 7).

Im Steckergehäuse 3 befinden sich nebeneinander Kontaktbuchsen 37, von denen in Fig. 7 eine dargestellt ist. Diese Kontaktbuchsen 37 werden durch die Führung 32 in ihrer Lage verriegelt, so daß sie beim Aufstecken des Gegensteckers 4 durch dessen Kontakte nicht aus dem Steckergehäuse 3 geschoben werden können. Die Kontaktbuchsen 37 sind im Querschnitt quadratisch oder rechteckig ausgebildet und haben zwei übereinander liegende Seitenwände 38, 39, von denen die Seitenwand 38 gerade verläuft und auf dem Boden 40 des Steckergehäuses 3 aufliegt. Die mit Abstand zu ihr liegende andere Seitenwand 39 weist einen U-förmig verformten Abschnitt 41 auf, in den die Führung 32 des Trägerteiles 25 eingreift. Aufgrund der U-förmigen Ausbildung dieses Abschnittes 41 ist die Kontaktbuchse 37 in ihrer Längsrichtung gegen Verschieben im Steckergehäuse 3 einwandfrei gesichert. Im Bereich zwischen der Führung 32 und dem Quersteg 28 des Trägerteiles 25 ist die Seitenwand 39 in bekannter Weise mit einer schräg herausgebogenen Zunge 42 versehen, die in entsprechende Öffnungen 43 in der die Vertiefung 34 aufweisenden Seite des Steckergehäuses 3 eingreifen. Die Zungen 42 sind entgegen Einsteckrichtung der Kontaktbuchsen 37 schräg nach hinten geneigt, so daß sie eine zusätzliche Arretierung der Kontaktbuchse 37 gewährleisten.

Die in der Einbaulage benachbart zum Quersteg 28 des Trägerteiles 25 liegende Stirnseite 44 des Steckergehäuses 3 ist mit Öffnungen 45 (Fig. 2 und 7) versehen, die mit den Öffnungen 29 im Quersteg 28 fluchten. Die Öffnungen 29 sind vorteilhaft in Steckrichtung der Kontakte des Gegensteckers 4 konisch verjüngt (Fig. 7), so daß das Zusammenstecken von Steckerhalter 2 und Gegenstecker 4 erleichtert wird. Vorteilhaft entspricht die Dicke des Steckergehäuses 3 der Höhe des Quersteges 28 (Fig. 7), so daß das Steckergehäuse 3 weitgehend geschützt im Steckerhalter 2 untergebracht werden kann.

An die Kontaktbuchsen 37 sind die entsprechenden Leitungen 46 angeschlossen, die über die Stirnseite 35 des Steckergehäuses 3 ragen.

Der Gegenstecker 4 ist in der Einbaulage starr im Spiegelgehäuse 1 befestigt und weist auf seiner dem Steckerhalter 2 zugewandten Stirnseite einen Einführtrichter 47 auf (Fig. 3), der sich in Richtung auf den Steckerhalter 2 erweitert. Innerhalb dieses Einführtrichters 47 befinden sich die (nicht dargestellten) Kontakte, die beim Zusammenstecken in die Öffnungen 29, 45 des Steckerhalters 2 und des Steckergehäuses 3 eingreifen.

Da der Trägerteil 25 kardangelenkartig beweglich ist, kann er sich gegenüber dem Gegenstecker 4 ausrichten, falls er nicht genau gegenüber ihm ausgerichtet sein sollte. Die Schenkel 23, 24, mit denen der Trägerteil 25 am Quersteg 21 gehalten ist, sind in ihrer Dicke so ausgebildet, daß sie in Richtung des Doppelpfeiles 48 (Fig. 4) in der X-Z-Ebene elastisch biegen können. Außerdem kann der Quersteg 21 in Richtung des Doppelpfeiles 49 (Fig. 5) in der X-Y-Ebene elastisch biegen. Erreicht wird dies dadurch, daß der Quersteg 21 an dem schmalen Verlängerungsabschnitt 15 der Stütze 14 angeordnet ist. Dieser Abschnitt 15 ist so dünn, daß er im erforderlichen Maße elastisch gebogen werden kann. Die gedachte Biegeachse des Abschnittes 15 steht senkrecht auf dem Grundkörper 7, während die gedachte Biegeachse der Schenkel 23, 24 sich parallel zur Oberseite des Grundkörpers 7 und senkrecht zur gedachten Biegeachse des Abschnittes 15 erstreckt. Aufgrund der beiden zueinander senkrechten Biegemöglichkeiten kann der Steckerhalter 2 beim Zusammenstecken mit dem Gegenstecker 4 in seine optimale Lage gebracht werden, auch wenn der Steckerhalter 2 und der Gegenstecker 4 nicht genau zueinander ausgerichtet sind.

Darüber hinaus ist der Steckerhalter 2 mittels der Führung 32 so ausgebildet, daß beim Einschieben des Steckerhalters 2 in den Gegenstecker 4 die Kontaktbuchsen 37 im Steckergehäuse 3 arretiert sind und nicht unbeabsichtigt aus dem Steckergehäuse herausgeschoben werden können. Der Steckerhalter 2 hat somit eine Doppelfunktion, indem er zum einen die beschriebenen Ausweichbewegungen durchführen kann und zum anderen eine Sekundärverriegelung für die Kontaktbuchsen 37 bildet.

Mit der beschriebenen Ausführungsform der Steckverbindungseinrichtung können der Gegenstecker 4 und das Steckergehäuse 3 blind zusammengesetzt werden, da der Steckerhalter 2 bei einer nicht genauen Ausrichtung von Steckergehäuse 3 und Gegenstecker 4 durch entsprechende Bewegungen dennoch einwandfrei mit dem Gegenstecker 4 verbunden werden kann.

## Patentansprüche

1. Steckverbindungseinrichtung, vorzugsweise für Außenrückblickspiegel von Kraftfahrzeugen, mit einem in einem Steckerhalter (2) aufgenommenen Steckergehäuse (3) mit wenigstens einem Kontakt (37), das mit einem Gegenstecker (4) mit wenigstens einem Gegenkontakt zusammensteckbar ist, wobei das Steckergehäuse (3) und/oder der Gegenstecker (4) relativ zueinander beim Steckvorgang bewegbar sind, wobei der Steckerhalter (2) einen Trägerteil (25) für das Steckergehäuse (3) aufweist,
**dadurch gekennzeichnet, dass** der Trägerteil über wenigstens einen elastisch biegbaren Biegeabschnitt (23, 24) an einen Quersteg (21) angeschlossen ist, der quer an einem elastisch biegbaren Abschnitt (15) einer Stütze (14) vorgesehen ist, dass der Biegeabschnitt (23, 24) und der Abschnitt (15) der Stütze (14) um winklig zueinander liegende Achsen elastisch biegbar sind, und dass die Stütze (14) von einem Grundkörper (7) des Steckerhalters (2) absteht.

2. Einrichtung nach Anspruch 1,
**dadurch gekennzeichnet, dass** der Steckerhalter (2) lösbar gehalten ist.

3. Einrichtung nach Anspruch 1 oder 2,
**dadurch gekennzeichnet, dass** der Steckerhalter (2) zwei vorzugsweise am Grundkörper (7) des Steckerhalters (2) vorgesehene Rastelemente (9, 11) aufweist.

4. Einrichtung nach einem der Ansprüche 1 bis 3,
**dadurch gekennzeichnet, dass** der elastisch biegbare Abschnitt (15) einstückig mit der Stütze (14) und dem Trägerteil (25) ausgebildet ist.

5. Einrichtung nach einem der Ansprüche 1 bis 4,
**dadurch gekennzeichnet, dass** der Trägerteil (25) mit zwei Biegeabschnitten (23, 24) an den Quersteg (21) angeschlossen, vorzugsweise einstückig mit ihm ausgebildet ist.

6. Einrichtung nach einem der Ansprüche 1 bis 5,
**dadurch gekennzeichnet, dass** der Steckerhalter (2) den Kontakt (37) im Steckergehäuse (3) gegen Verschieben beim Zusammenstecken mit dem Gegenstecker (4) sichert.

7. Einrichtung nach Anspruch 6,
**dadurch gekennzeichnet, dass** der Steckerhalter (2) mindestens einen Arretierteil (32) aufweist, der den Kontakt (37) gegen Verschieben sichert.

8. Einrichtung nach Anspruch 6 oder 7,
**dadurch gekennzeichnet, dass** das Steckergehäuse (3) mit wenigstens einer Ausnehmung (34) für den Durchtritt des Arretierteiles (32) des Steckerhalters (2) versehen ist.

9. Einrichtung nach einem der Ansprüche 6 bis 8,
**dadurch gekennzeichnet, dass** der Kontakt (37) durch eine Kontaktbuchse gebildet ist, die zum Eingriff des Arretierteiles (32) mit einem entsprechend geformten Eingriffsabschnitt (41) versehen ist.

10. Einrichtung nach einem der Ansprüche 6 bis 9,
**dadurch gekennzeichnet, dass** der Arretierteil (32) am Trägerteil (25) des Steckerhalters (2) vorgesehen ist und vorteilhaft eine Führung für das Steckergehäuse (3) beim Einsetzen in den Steckerhalter (2) bildet.

11. Einrichtung nach einem der Ansprüche 6 bis 10,
**dadurch gekennzeichnet, dass** der Arretierteil (32) im Querschnitt L-förmig ausgebildet ist und vorzugsweise vom Grundkörper (7) des Steckerhalters (2) absteht, an dem vorzugsweise mindestens eine weitere Führung (31) für das Steckergehäuse (3) vorgesehen ist.

## Claims

1. A plug connection device, preferably for exterior rearview mirrors of motor vehicles, comprising a plug housing (3) with at least one contact (37), which plug housing is received in a plug support (2) and can be plugged together with a mating plug (4) with at least one mating contact, wherein the plug housing (3) and/or the mating plug (4) are movable relative to one another during the plug in process, wherein the plug support (2) comprises a support component (25) for the plug housing (3), the support component is connected through at least one elastically bendable bending section (23, 24) to a transversal bar (21), which is provided transversally at an elastically bendable section (15) of a support (14), the bending section (23, 24) and the section (15) of the support (14) are elastically bendable about axes disposed at an angle relative to one another, and the support (14) protrudes from a base body (7) of the plug support (2).

2. A device according to claim 1, wherein the plug support (2) is removably supported.

3. A device according to claim 1 or 2, wherein the plug support (2) comprises two engagement elements (9, 11 preferably provided at the base body (7) of the plug support (2).

4. A device according to one of the claims 1 through 3, wherein the elastically bendable section (15) is integrally configured with the support (14) and the support component (25).

5. A device according to one of the claims 1 through 4, wherein the support component (25) is connected to the transversal beam (21) through two bending sections (23, 24), preferably integrally configured therewith.

6. A device according to one of the claims 1 through 5, wherein the plug support (2) secures the contact (37) in the plug housing (3) against displacement during plugging together with the mating plug (4).

7. A device according to claim 6, wherein the plug support (2) comprises at least one arresting component (32), which secures the contact (37) against movement.

8. A device according to claim 6 or 7, wherein the plug housing (3) is provided with at least one recess (34) for passing through the arresting component (32) of the plug support (2).

9. A device according to one of the claims 6 through 8, wherein the contact (37) is formed by a contact bushing, which is provided with an accordingly configured engagement section (41) for engaging the arresting component (32).

10. A device according to one of the claims 6 through 9, wherein the arresting component (32) is provided at the support component (25) of the plug support (2), advantageously forming a guide for the plug housing (3) during insertion into the plug support (2).

11. A device according to one of the claims 6 through 10, wherein the arresting component (32) is configured L-shaped in cross section and preferably protrudes from the base body (7) of the plug support (2), at which preferably at least one additional guide (31) for the plug housing (3) is provided.

## Revendications

1. Dispositif de connexion, de préférence pour rétroviseurs extérieurs de véhicules, comprenant un logement de prise (3) reçu dans un support de connecteur (2) comprenant au moins un contact (37) qui peut être connecté avec un connecteur conjugué (4) comprenant au moins un contact conjugué, le logement de prise (3) et/au le connecteur conjugué (4) pouvant être déplacés l'un par rapport à l'autre lors du processus de connexion, le support de connecteur (2) présentant une partie porteuse (25) pour le logement de prise (3), **caractérisé en ce que** la partie porteuse est raccordée par le biais d'au moins une section de flexion (23, 24) pouvant être pliée élastiquement à une nervure transversale (21) qui est prévue transversalement à une section pouvant être pliée élastiquement (15) d'un appui (14), que la section de flexion (23, 24) et la section (15) de l'appui (14) peuvent être pliées élastiquement autour d'axes se trouvant à angles les uns des autres, et que l'appui (14) est éloigné d'un corps de base (7) du support de connecteur (2).

2. Dispositif selon la revendication 1,
**caractérisé en ce que** le support de connecteur (2) est maintenu de manière amovible.

3. Dispositif selon la revendication 1 ou 2,
**caractérisé en ce que** le support de connecteur (2) présente deux éléments d'encliquetage (9, 11) prévus de préférence sur le corps de base (7) du support de connecteur (2).

4. Dispositif selon l'une quelconque des revendications 1 à 3,
**caractérisé en ce que** la section pouvant être pliée élastiquement (15) est réalisée d'une pièce avec l'appui (14) et la partie porteuse (25).

5. Dispositif selon l'une quelconque des revendications 1 à 4,
**caractérisé en ce que** la partie porteuse (25) est raccordée avec deux sections de flexion (23, 24) à la nervure transversale (21), de préférence réalisée d'une pièce avec celle-ci.

6. Dispositif selon l'une quelconque des revendications 1 à 5,
**caractérisé en ce que** le support de connecteur (2) sécurise le contact (37) dans le logement de prise (3) contre un coulissement lors de la connexion avec le connecteur conjugué (4).

7. Dispositif selon la revendication 6,
**caractérisé en ce que** le support de connecteur (2) présente au moins une partie de blocage (32) qui sécurise le contact (37) contre un coulissement.

8. Dispositif selon la revendication 6 ou 7,
**caractérisé en ce que** le logement de prise (3) est pourvu d'au moins un évidement (34) pour le passage de la partie de blocage (32) du support de connecteur (2).

9. Dispositif selon l'une quelconque des revendications 6 à 8,
**caractérisé en ce que** le contact (37) est formé par une douille de contact qui est pourvue d'une section d'engagement (41) moulée en conséquence pour l'engagement de la partie de blocage (32).

10. Dispositif selon l'une quelconque des revendications 6 à 9,
**caractérisé en ce que** la partie de blocage (32) est prévue sur la partie porteuse (25) du support de connecteur (2) et forme de préférence un guide pour le logement de prise (3) lors de l'insertion dans le support de connecteur (2).

11. Dispositif selon l'une quelconque des revendications 6 à 10,
**caractérisé en ce que** la partie de blocage (32) est réalisée en forme de L en section transversale et est de préférence éloignée du corps de base (7) du support de connecteur (2) sur lequel est de préférence prévu au moins un guide supplémentaire (31) pour le logement de prise (3).
